# EUROPEAN PATENT APPLICATION

(11) **EP 1 383 123 A2**
(43) Date of publication of application: **21.01.2004**
(21) Application number: 03014519.7
(22) Date of filing: 03.07.2003
(51) Int. Cl.: G11B 17/22, G11B 17/26

(54) **Information replaying apparatus and method for replaying information**

(30) Priority: 17.07.2002 JP 2002208898
(71) Applicant: Pioneer Corporation, Tokyo-to (JP)
(72) Inventor: Matsuda, Norio, Pioneer Corporation Kawagoe Works, Kawagoe-shi, Saitama-ken (JP); Goto, Hiroki, Pioneer Corporation Kawagoe Works, Kawagoe-shi, Saitama-ken (JP); Ono, Yoshitaka, Pioneer Corporation Kawagoe Works, Kawagoe-shi, Saitama-ken (JP)
(74) Representative: Reinhard - Skuhra - Weise & Partner GbR

(57) **Abstract**

A compact information replaying apparatus is provided to successively replay one or more DVDs with less vacant time between the replay of two DVDs. An information replaying apparatus(1), such s DVD player, comprises a chassis(1B), grasping member(2), separation member(4, XG1, XG2), and replay unit(5). In the chassis(1B), a plurality of disc-like information recording mediums (such as DVDs) are stacked one on another with one surface of each medium touched to one surface of another juxtaposed medium. The grasping member(2), disposed in the chassis(1B), grasps a disc-like recording medium to be replayed among the plurality of recording mediums. The separation member(4, XG1, XG2) separates one or more other disc-like recording mediums other than the recording medium to be replayed, from the recording medium to be replayed. The replay unit(5) is in charge of replaying pieces of content information recording on an information-recorded surface of the disc-like recording medium to be replayed.

## Description

### BACKGROUND OF THE INVENTION

### 1. Field of the Invention

The present invention relates to an information replaying apparatus and a method for replaying information, which have the capability of replaying pieces of content information recorded on a disc-like recording medium, such as CDs (Compact Discs), MD (Mini Discs), and DVD (Digital Versatile Discs).

### 2. Description of the Related Art

Recording mediums, such as CDs, MDs, and DVDs, have already been available commercially, together with various types of players for replaying information recorded on such mediums. The players include an indoor type of player for indoor use, such as listening to music and viewing movies, and an on-vehicle type of player for automobile use. In the on-vehicle type of player, to allow crews to listen to music or view movies, the player operates in association with speakers electrically connected to a car stereo system or an image display unit or others electrically connected with a car navigation system. If such a car stereo system or a car navigation system is already mounted on the vehicle, those systems can be used as part of the on-vehicle type of player.

Among the foregoing various types of recording mediums, the DVD is greater than other types of recording mediums in that a larger amount of content information, such as video and audio data, can be recorded on a single disc. For example, content information that corresponds to video and audio data required for one full movie can even be recorded on a single DVD. Hence it can be considered that the DVD will prevail as such recording medium in the market.

A DVD player, which is one type of the information replaying apparatus, replays pieces of information recorded on the DVD. Some conventional DVD players have been configured to contain a plurality of DVDs, in which the next DVD can be replayed after the replay of one DVD has been completed, without labor for unloading the replayed DVD and unloading the next DVD to be replayed. Practically, for such a successive replay operation, there has been known a disc case equipped with a plurality of trays on each of which a DVD is placed. And both of the DVD player and the disc case have been constructed to permit the disc case to be loaded into the DVD player at a stroke. In this construction, when a certain DVD is desired to be replayed, a tray on which the DVD to be replayed is placed is first pulled out of the disc case within the DVD player. A unit called "pickup unit," which includes a disc clamp mechanism, a spindle motor, and a pickup, is then moved to a predetermined position that faces the pulled-out DVD, before processing for the replay is started. As clear from the above, this type of DVD player eliminates the need for manual unloading/loading, or exchanging DVDs, thus relieving user's operational burden.

However, the foregoing DVD player for the successive replay operation has the problems as follows. A first problem is concerned with an additional space required within the DVD player. That is, in the DVD player with the disc case, a space required for pulling out each tray within the DVD player (i.e., a space where the pickup unit is arranged at a predetermined position for replaying a DVD) should be secured. This will inevitably lead to larger-sized DVD players. To be specific, it is necessary that at least half the tray be pulled out of the disc case. This condition is especially hard to keep when such DVD player is mouthed on a vehicle, because there is not so much ambient spacing for the DVD player in usual vehicles and possible spacing for that is limited to some locations such as the trunk. In other words, in general, it is very difficult to mount such successive-replay type of DVD players as part of the dashboard regarded as being the most appropriate location for such mounting.

Furthermore, in the case of the foregoing DVD player, a transient time from the finish of replay of a certain DVD to the start of replay of the next DVD is relatively longer. This is because the successive replay operation requires a series of operations that should be done successively. That is, the pickup unit and others step back from a DVD that has been subjected to the replay, the tray on which the DVD is placed is moved back into the disc case, the tray on which another DVD is placed is pulled out of the disc case, and the pickup unit and others advance to a given position for the pulled-out DVD. Accordingly, a smooth transit operation from one DVD to another (that is, a shorter interval of time between the replay of two DVDs) is difficult to obtain, even though a plurality of DVDs can be loaded at a time.

### SUMMARY OF THE INVENTION

The present invention has been made with due consideration to the foregoing drawbacks. A first object of the present invention is to provide a compact-size information replaying apparatus that is able to provide a smoother and quicker transit operation between a after-replay disc-like recording medium to another disc-like recording medium to be replayed from now. A second object of the present invention is to provide a method for replaying information, which allows an information replaying apparatus to have the above features.

In order to achieve the foregoing objects, the information replaying apparatus according to the present invention comprises an a chassis in which a plurality of disc-like information recording mediums are stacked one on another with one surface of each medium touched to one surface of another juxtaposed medium; a grasping member configured to be disposed in the chassis and to grasp a disc-like recording medium to be replayed among the plurality of recording mediums; a separation member configured to separate one or more other disc-like recording mediums other than the recording medium to be replayed, from the recording medium to be replayed; and a replay unit configured to replay pieces of content information recording on an information recorded surface of the disc-like recording medium to be replayed.

In the information replaying apparatus of the present invention, one feature is originated from the configuration where, DVDs, which are exemplified as disc-like recording mediums contained in the chassis, are placed so that a surface of one DVD is touched to a surface of another DVD adjacently located. Thus, unlike the conventional, it is not required to use trays on each of which a DVD is placed. Even if only this feature is provided, the information replaying apparatus according to the present embodiment can be made compact.

A second feature is originated from the configuration where the information replaying apparatus according to the present invention has the grasping member, disposed in the chassis, for grasping the disc-like recording medium to be replayed (hereafter simply referred to as "DVD to be replayed") and the separation member for separating, from the DVD to be replayed, one or more other disc-like recording mediums (hereafter simply referred to as "DVDs to be separated"). It can be assumed that the "grasping member" is equipped with means, including arms, for grasping the outer circumferential edge of the DVD to be replayed in the radial direction thereof. On the other hand, as described later, the "separation member" can be configured to realize the most optimum separating operation by adjustably relating the separation member to a DVD container in terms of their configurations. Additionally, it can be assumed that, as a simpler way, like the above grasping member, the "separation member" is equipped with arm members and others to grasp the circumference edges of the DVDs to be separated in their radial directions and means for moving the DVDs to be separated, using the arm members and others.

The disc-like recording mediums according to the present invention can be made into "a stack consisting of a plurality of disc-like recording mediums stacked one on another with one surface of each medium touched to one surface of another juxtaposed medium." Such stack is contained into the chassis. Typically, the DVDs to be separated according to the present invention is therefore placed such that they are located in parallel to the DVD to be replayed in the perpendicular directions to the DVD to be replayed on both sides thereof. As a result of it, in the following, there are some cases where the terms of "a first DVD to be separated" and "a second DVD to be separated" are used, without any definitions, as a synonymous term with "one or more other disc-like recording mediums" in the present invention. The terms of "first" and "second" mean "one either one side" and "the other side" of the DVD to be replayed, respectively.

In addition, it is preferred that the "separation" of the DVDs to be separated from the DVD to be replayed is carried out such that the first and second DVDs to be separated are moved in the perpendicular directions to the DVD to be replayed. Further, it is sufficient that a "distance" realized by the separation is set as follows. That is, the first (or second) DVD to be separated facing an information-recording surface of the DVD to be replayed is set to the degree to which the later-described replay unit can be arranged in front of the information-recording surface. In contrast, the second (or first) DVD to be separated is set to the degree to which the DVD to be replayed is avoided from touching the DVD to be separated.

Accordingly, the DVD to be replayed is separated from the others. The replay unit is moved to face a content information recording surface of the DVD to be replayed that has been separated, and then proceeds to replay processing of the content information. In cases where the replay for the DVD to be replayed has been completed and it is still desired to replay the next DVD, both of the first and second DVD to be separated are stacked back onto the after-replay DVD as they were initially, and then the next DVD to be replayed will be subjected to the foregoing grasping, separation, and replaying action in a repeated manner.

In the present invention, a spatially small action is enough for separating the DVD being replayed from the other DVDs. Practically, it is sufficient that the first DVD to be separated is moved to only the degree to which a minimum space allowing the replay unit to be disposed between the DVD to be replayed and the first DVD that has been separated. In contrast, it is still sufficient that the second DVD to be separated is moved to only the degree to which a minimum level to avoid interference with the DVD to be replayed is secured. That is, provided that only the spaces to enable the foregoing minimum movements are left, the DVD to be replayed can be subjected to the replay, thus avoiding the apparatus from being produced larger. Furthermore, the fact that an action needed for separating the DVD to be replayed can be limited to an extremely smaller space will lead to a very smooth and quick successive replay operation in which completion of replay of a desired DVD is followed successively by starting replay of a new DVD.

Thus, according to the present invention, the information replaying apparatus can perform a greatly smooth and quick successive replay operation. In other words, a desired DVD to be replayed can be selected very quickly, with the information replaying apparatus still being made compact.

In particular, in cases where the information replaying apparatus of the present invention is mounted on a vehicle, unlike the conventional, it is not always necessary to arrange the apparatus within larger spaces, such as the trunk, due to the compact information replaying apparatus. Thus, the information replaying apparatus can be mounted in narrower spaces, such as the dashboard. One preferred example is to mount such information replaying apparatus as part of the dashboard. This mounting way gives users an easier access to the DVD player placed in front of the users. Hence the DVDs contained in the apparatus can be pulled out or exchanged with ease.

Still, in the present invention, the "disc-like recording medium to be replayed" can be obtained by selecting an arbitrary one from the "stack consisting of a plurality of disc-like recording mediums stacked one on another with one surface of each medium touched to one surface of another juxtaposed medium." Thus, such selection includes a selection of a DVD located at one endmost position of the stack consisting of plural DVDs. In this case, however, either one of the first or second DVD to be separated will not be present (i.e., the number of DVDs is zero). Therefore, the "one ... other disc-like recording medium" defined in the present invention corresponds to the above case of "the number of DVDs on one side is zero," while the "more (than one) other disc-like recording mediums defend in the present invention includes the above case as well as the case where the first and second DVDs to be separated are both present.

One mode of the information replaying apparatus according to the present invention is that the separation member comprises a holding member configured to fixedly hold a disc-like recording medium located immediately on the disc-like recording medium to be replayed among the other disc-like recording mediums; and a drive unit configured to move the disc-like recording medium fixedly held by the holding member along a stacking direction of the plurality of stacked disc-like recording mediums.

According this mode, a DVD to be replayed can be separated from the others in a preferred fashion. For instance, it can be assumed that the first and second DVDs to be separated are located on both upper and lower sides of a DVD to be replayed, the holding member consists of a first holding member and a second holding member dedicated respectively to fixedly holding the first and second DVDs to be separated, and the drive unit consists of a first drive unit and a second drive unit in the similar way to the holding member. If such a case is assumed, the first holding member fixedly holds a DVD located at a lowermost position in the first DVD(s) to be separated (i.e., a DVD immediately on the DVD to be replayed). In contrast, the second holding member fixedly holds a DVD located at an uppermost position in the second DVD(s) to be separated (i.e., a DVD immediately beneath the DVD to be replayed). The first drive unit will exert a drive force onto the lowermost DVD via the first holding member, whereby the whole DVDs contained as the first DVD to be separated are moved (like being lifted up). On the other hand, the second drive unit will exert a drive force onto the uppermost DVD via the second holding member, whereby the whole DVDs contained as the second DVD to be separated are moved (like being pulled down).

Accordingly, in the information replaying apparatus of the present invention, the first and second DVDs to be separated can be separated from a desired DVD to be replayed steadily and speedily.

In the above case, the first and second DVDs to be separated have been explained about the mode in which the DVDs are stacked in the "up-and-down" direction. However, the present invention is not restricted to such one. An alternative is provided such that the DVDs are stacked in the "lateral (right and left)" direction. Though it might be irregular, another example is to stack the DVDs in an oblique direction, in which, for example, the first DVD(s) to be separated is located on an upper left side of the stack, while the second DVD(s) to be separated is located on a lower right side in the stack.

In the above, it is particularly preferred that each of the plurality of recording mediums has a central hole formed at a center thereof and the holding member is formed to fixedly hold an edge encircling the central hole of the disc-like recording medium located immediately on the disc-like recording medium to be replayed.

This configuration will permit the holding member to fixedly hold the one or more other disc-like recording mediums in a steady manner. Hence the foregoing various operations become more effective, thus enhancing the foregoing various advantages.

In the above, it is also preferred that the grasping member includes a disc body on which a protrusion is formed to be in contact with the edge encircling the central hole of the disc-like recording medium so that the edge is fixedly held, the protrusion being formed to be able to pass through the central hole of the disc-like recording medium, and the drive unit is configured to move the disc body to locate the disc body at the central hole of the disc-like recording medium immediately on the disc-like recording medium to be replayed.

This configuration enables a steadier lifting-up operation of the first DVD to be separated as well as a steadier pulling-down operation of the second DVD to be separated.

For example, it can be assumed that the separation member in the above mode comprises three or more components which include, in turn from the outer circumferential side, a cylindrical member, a disc member serving as the holding member, and a ball screw. The ball screw engages with a hole formed longitudinally through the disc member and passes therethrough. A thread is formed on the circumferential surface of the hole. The disc member is contained in the cylindrical member. Protrusions, which are formed on the outer circumferential surface of the disc member, are made to protrude from longitudinal slits formed thorough the cylindrical member, respectively.

Therefore, when the ball screw is rotated around the center axis passing at the center of a section perpendicular to its axial direction, the disc member tries to rotate responsively to the rotation of the ball screw. Actually, however, because the protrusions on the disc member are respectively inserted into the silts of the cylindrical member to protrude therefrom, the disc member is prohibited from rotating (that is, locked). In addition, due to the fact that the balls screw engages with the thread on the hole of the disc member, rotating the ball screw obliges the disc member to longitudinally move along the axial direction of the cylindrical member.

In addition, provided that the diameter of an imaginary circle formed by tracing the tips of the protrusions of the disc member keeps a properly set relationship with that of the central hole of each DVD, only moving the disc member within the cylindrical member along its axial direction will readily enable a fixed hold of a DVD to be replayed, chosen from the foregoing plural DVDs; that is, the "separation" of the DVD to be replayed. A more practical example is as follows.

It is now assumed that there are contained six DVDs in a container and the fourth DVD is a target to be "separated." In the cylindrical member in which the disc member serving as the first holding member is installed, the disc member is longitudinally moved to a position corresponding to the third DVD (counted from one end of the stack consisting of six DVDs). Like the first holding member, the second holding member operates, so that the disc member, which is different from the first holding member, is moved to a position corresponding to the second DVD (counted from the other end of the stack). Both of the movements may be achieved by rotating the ball screw (partly composing each of the first and second drive units) by proper a proper amount of angles (for instance, two or more rotations are counted as being 360 degrees, ..., 720 degrees, ..., 1080 degrees, etc., while their reverse rotations are noted as -360 degrees, ..., -720 degrees, etc.). In the course of movements of the disc member toward a DVD to be replayed, the disc member is able to run through the central holes of other DVDs stacked on or above (below) the DVD to be replayed.

Further, if both of the protrusions of each disc member and the central hole of a DVD are adjusted to selection of their materials, sizes and others so that the tips of the protrusions of each disc member are able to press outwardly the inner circumferential surface of the central hole of the DVD, each of the disc members will fixedly hold each DVD at the central hold (that is, holding each DVD from it inner circumferential surface), when the two disc members, serving as the first and second holding members, reach the third DVD (counted from one end of the stack) and the second DVD (counted from the other end thereof), respectively. After realizing this holding state, the outer circumferential edged of a DVD to be replayed is gasped by the foregoing grasping member, and forces are applied to the grasping member by each of the first and second drive units, with their working points at each point at which each of the first and second DVDs to be separated is fixed held by the disc member. This application of the forces permits both of one stack of three DVDs and the stack of two DVDs to move, respectively, so as to separate from the DVD to be replayed. In this case, the forces exerted to the first and second DVDs to be separated are opposite in their directions to each other.

In this way, the above configuration is able to specify one desired DVD among a plurality of DVDs, and then separate the desired DVD from the others in an easier and steadier manner.

Another mode of the information replaying apparatus according to the present invention is provided. That is, the plurality of disc-like recording mediums are contained in a container so that the mediums are stacked one on another with no gap therebetween, the container being loadable into the chassis and having a first lid member and a second lid member, and the separation member is configured to separate, from the disc-like recording medium to be replayed, both of the first and second lid members as well as the other disc-like recording mediums other than the disc-like recording medium to be replayed.

In this mode, pluralities of DVDs are first accommodated into the container, and then the container is loaded into the information replaying apparatus, whereby the plurality of DVDs are contained in the apparatus. Utilizing the container is convenient in handing the DVDs, because a plurality of DVDs can be stored and delivered at a time even when they are in off-replay and loaded as one pack (as it is) into the information relaying apparatus when being replayed.

Particularly, the first and second lid members, which compose the container, are separable from each other. Further, both of the first DVD to be separated and the first lid member move together, while both of the second DVD to be separated and the second lid member move together. Such movements will enable the separation between the first and second lid members and a DVD to be replayed.

Accordingly, with the container provided to make it easier to handle a plurality of DVDs, a DVD to be replayed can be separated from the first and second DVD to be separated in a balanced way therebetween.

It is still preferred that, in the above configuration, the container is configured to be able to cause a recess formed on each of the first and second lid members to be fitted to a projection formed on the other of the first and second lid members, thus an open and close operation being allowed between the first and second lid members, and to cause the recess to be released from the protrusion fitted to the recess, thus the first and second lid members being separable; and the separation member comprises a releasing member configured to release a fitted state realized between the recess and the projection of the container loaded into the chassis.

Hence, the first and second lid members of the container can be coupled to each other, if making both of the projection and the recess fit to each other. It is therefore possible to deliver safely the plurality of DVDs contained in the container. In cases where some conditions, such as positions of the projection and recess formed on the first and second lid members, are adjusted properly, the fitted portions at each of which the projection fits to the recess can be served as hinges. This allows the first and second lid members to open and close steadily.

In addition, in the above configuration, there is provided the releasing member to release a fitted state realized between the recess and the projection. As to this releasing member, its practical configurations can be assumed as follows.

For instance, the protrusion is formed on each of two facing planes of the first lid member, while the recess is formed on each of two facing planes opposed to the two facing planes of the first lid member. A tongue-like member is produced in each of the facing planes so that the tongue-like member is a plate including the projection (or the recess), with one edge of the plate rigidly connected to each facing plane itself and the remaining edges thereof cut off from each facing plane itself. If assuming that the tongue-like member is formed into a quadrangle as the flat-plate shape, for example, its one edge is coupled with the facing plane, while the remaining three edges are cut from the facing plane

It is therefore possible that the tongue-like member deforms so as to deviate from the facing plane, with the one edge left as an axis from which the member is curved. By way of example, of the remaining three edges, a location on the edge opposed to the one edge rigidly connected to the facing plane itself is pushed inward from outside the container. This pushing operation will enable the tip of the tongue-like member to move so that the tongue-like member is bent at the base edge functioning as a supporting point (that is, the edge rigidly connected to the facing plane, serving as an axis) so as to "curve" inwardly from the facing plane. This motion of the tongue-like member allows the fitted state between the protrusion and the recess to be released. In this case, components primarily including the tongue-like member and means for pushing the member (such as a pushing pin) realize one example of the foregoing "releasing member."

Accordingly, in this information replaying apparatus, in addition to the fact that the container can be handled as one unit, a DVD to be replayed can be separated from the first and second DVD to be separated in a relatively easier manner.

In the configuration in which the container is provided, it is still preferred that each of the first and second lid members has an opening through which at least part of an outer circumferential edge of each of the disc-like recording mediums is viewed, and the grasping member is configured to grasp, through the opening, the outer circumferential edge of the disc-like recording medium to be replayed, along a radial direction thereof, in the container loaded into the chassis.

This configuration enables a steadier grasp of a desired disc-like recording medium to be replayed. That is, though pluralities of DVDs are contained in the container, it is possible for the grasping member to grasp the DVD to be replayed at the outer circumference via the opening. Hence, both of easily handling a plurality of DVDs by using the container and the successive replay operation for DVDs performed smoothly and quickly by the information replaying apparatus can be realized without failure. In addition, since a DVD to be replayed is gripped, as above, motions that should be carried out by the separation member can be simpler and more natural, with wasteful motions lessened, thus simplifying the construction of the separation member.

In the configuration in which the container is provided, it is still preferred that each of the first and second lid members has a cylindrical fixing member fittable into the central hole of each of the disc-like recording medium, and the drive unit is configured to move the disc body along a direction in which the fixing member extends so that the disc body is located at the central hole of the disc-like recording medium immediately on the disc-like recording medium to be replayed.

In this case, since in the container is provided the cylindrical fixing member fittable into the central hole of each DVD. This allows the DVDs to be secured surely in the container, whereby enhancing safety in storage, delivery, and other.

Particularly, since the fixing member is configured to help the movement of the disc member, the fixing member constitutes part of the separation member (i.e., at least part of the foregoing holding element) for separating the first and second DVDs to be separated from a DVD to be replayed. Such "separating" operation is therefore carried out cooperatively by the fixing element in the container (which can be regarded as "container-side separation means") and apparatus-side separation means.

It is therefore possible that the functions of the separation member are adequately divided and assigned to both of the information replaying apparatus and the container, simplifying the configuration of the information replaying apparatus. In addition, both of the first DVD to be separated and the first lid member can be moved together, whilst both of the second DVD to be separated and the second lid member can be moved together.

Further, in addition to the "fixing element," the container in the above mode may be provided with the foregoing "opening," or, at least part of "releasing element" to "tongue-like member." It is therefore possible to have both of the above advantages resulting from "fixing element" and the advantages resulting from the "opening," or, at least part of "releasing element" to "tongue-like member." Separating a desired one from the other DVDs can therefore be carried out without failure.

According to another mode of the information replaying apparatus of the present invention, the protrusion has a given amount of elasticity.

Thus, the disc member is allowed to not only move through the central hole of each DVD but also hold a DVD at its inner circumferential surface. The former "movement" is exemplified as being travel through the first DVDs to be separated (for example, consisting of three DVDs), which should be separated from a DVD to be replayed. In such an example, the disc member has to reach the third DVD, during which time the disc member travels through the central holes of the two DVDs. Hence a remarkably high rigidity of the protrusions makes such movement difficult or impossible. By contrast, when the disc member reaches the third, the latter "holding" should be achieved for the third DVD. However, the rigidity of the protrusions is too high, the holding operation is also difficult or impossible. Therefore, to fulfill the above two requirements simultaneously, a specific relationship between the protrusions and the central hole of each disc-like recording medium should preferably be met in terms of various factors such as materials and shapes. It can be considered that the material, shape, and others of the protrusions are solely adjusted to realize the foregoing two requirements of movement and holding, because such factors as material and hole size of the "disc-like recording medium" are usually fixed.

Practically, it is preferred that an imaginary circle formed by tracing the tips of the protrusions is approximately equal in the diameter to the central hole of each DVD and the protrusions are made of an appropriately selected material.

In the above mode, such a condition is taken into account in selecting the elasticity of the protrusions. The protrusions are configured to have a given amount of elasticity, thus fulfilling the requirements for the foregoing movement and holding at the same time.

The "given amount of elasticity" will not be determined uniquely. However, it is possible to determine such amount through such means as experiment, theoretical computation, computer simulation, or rule of thumb that consider various factors. A drive power consumed by the drive unit to drive the disc member is one of primary factors that should be taken into account.

In the present invention, as clear from the above, it would be most preferable to give the protrusions a given amount of elasticity, but other various modes are of course applicable to the present invention.

On the other hand, in order to achieve the foregoing objects, there is provided a method for replaying information comprising the steps of: inserting, into a chassis, at a time, a plurality of disc-like information recording mediums stacked one on another with one surface of each medium touched to one surface of another juxtaposed medium so that the mediums are loaded at given positions in the chassis; grasping a disc-like recording medium to be replayed among the plurality of recording mediums loaded at the given positions in the chassis; separating one or more other disc-like recording mediums other than the recording medium to be replayed, from the recording medium to be replayed; and replaying pieces of content information recorded on an information recording surface of the disc-like recording medium to be replayed.

Using this method for replaying information, the foregoing information replaying apparatus can be operated in preferred conditions.

The above various operations and advantages as well as the other features or merits from the present invention will become apparent when referring to the description of a preferred embodiment and the accompanying drawings, which are as follows.

### BRIEF DESCRIPTION OF THE DRAWINGS

Other objects and aspects of the present invention will become apparent from the following description and embodiments with reference to the accompanying drawings in which:
FIG. 1 is a perspective view outlining the entire configuration of a DVD player according to an embodiment of the present invention;
FIG. 2 is a perspective view outlining the entire configuration of a DVD case to be loaded into the DVD player shown in FIG. 1;
FIG. 3 is the top plan view of an upper lid member constituting part of the DVD case;
FIG. 4 is an enlarged view detailing the configuration of a tongue-like member shown by a circle A in FIG. 3;
FIG. 5 is a perspective view explaining the entire constitution of the tongue-like member shown in FIG. 4;
FIGS. 6A and 6B are, respectively, the frontal view and the top plan view of a DVD-grasping mechanism incorporated in the DVD player shown in FIG. 1;
FIG. 7 is a top plan view representing the configuration of a DVD-case separation mechanism incorporated in the DVD player shown in FIG. 1;
FIGS. 8A and 8B are, respectively, the frontal view and the plan view of a desired-DVD separation mechanism incorporated in the DVD player shown in FIG. 1;
FIG. 9 is an exploded perspective view explaining in detail a guide mechanism contained in the DVD case shown in FIG. 2;
FIGS. 10A and 10B illustrates the operations of the guide mechanism contained in the DVD case shown in FIG. 2;
FIG. 11 shows a flowchart for processing for replying DVDs, which is carried out by the DVD player shown in FIG. 1;
FIG. 12 shows a section of the DVD case shown in FIG. 2, in which pluralities of DVDs are loaded;
FIG. 13 is another section of the DVD case showing another situation, developed from the situation shown in FIG. 12, where the inner circumferences of holes of two DVDs located immediately on and immediately beneath a desired DVD to be replayed are fixedly held by protrusions of disc members of the guide mechanism;
FIG. 14 is another section of the DVD case showing another situation, developed from the situation shown in FIG. 13, where the DVD to be replayed has been separated and a pickup unit is made to locate a position oppose to the information recording surface of the DVD;
FIG. 15 is a perspective view in which the DVD to be replayed has been separated; and
FIGS. 16A to 16C are the whole perspective view of a conventional DVD player, the top plan view thereof, and a side view thereof, which are employed to explain the configuration of the conventional DVD player.

### DETAILED DESCRIPTION OF PREFERRED EMBODIMENT

Referring to the accompanying drawings, preferred embodiment of the present invention will now be described. The following embodiment will be described about a DVD player to which the information replaying apparatus is functionally applied.

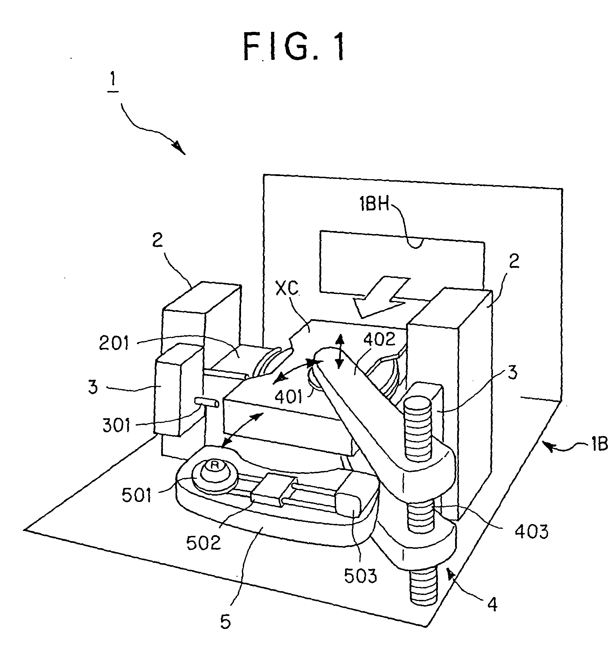

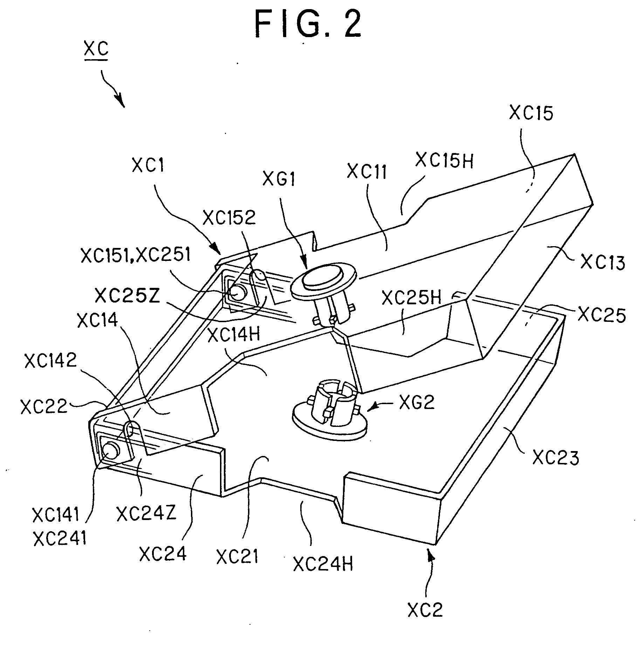

Refereeing to FIGS. 1 to 6, the confirmation of the DVD player according to the present embodiment will be described. FIG. 1 is a perspective view outlining the entire configuration of the DVD player according to the present embodiment. On the other hand, FIGS. 2 to 6 show various constituents employed by the DVD player shown in FIG. 1, which will be described later.

As shown in FIG. 1, the DVD player is equipped with a chassis 1B, DVD grasping mechanisms 2, DVD-case separation mechanisms 3, a desired-DVD separation mechanism 4, and a pickup unit 5. Of these, as shown in FIG. 1, a attaching/detaching opening 1BH for attaching and detaching a DVD case XC is formed at a frontal position of the chassis 1B. A plurality of DVDs 100, which are loaded in the DVD case XC, are put into the chassis 1B through the attaching/detaching opening 1BH under the operation of a case-carrying mechanism. The case-carrying mechanism is, for example, configured to hold both sides of the DVD case XC to slidably move it. The plurality of DVDs 100 are thus located at a given position which is an approximately spatial center among the foregoing constituents, that is, the DVD-grasping mechanisms 2, DVD-case separation mechanisms 3, desired-DVD separation mechanism 4, and pickup unit 5.

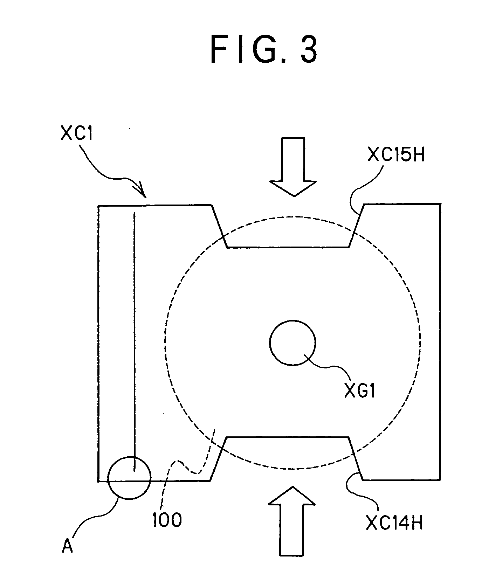

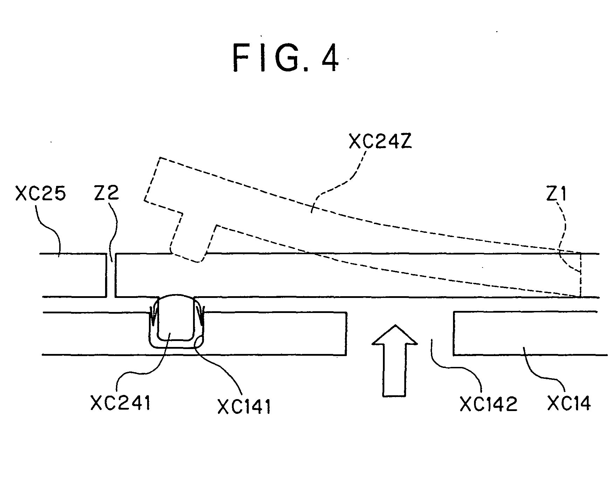

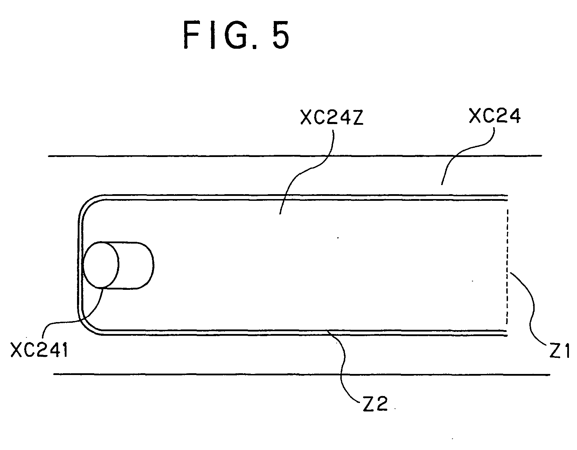

Prior to describing the foregoing constituents composing a main body of the DVD player 1, the DVD case XC will be described with reference to FIGS. 2 to 5. The DVD case XC plays a significant roll in the present embodiment such that the DVD case XC takes part in the desired-DVD separation mechanism 4, as will be described later. FIG. 2 is a perspective view outlining the entire configuration of the DVD case and FIG. 3 is the top plan view of an upper lid member constituting part of the DVD case. In addition, FIG. 4 is an enlarged view detailing the configuration of a tongue-like member shown by a circle A in FIG. 3 and FIG. 5 is a perspective view explaining the entire constitution of the tongue-like member.

As shown in FIG. 2, the DVD case XC includes, as key parts, an upper lid member XC1, a lower lid member XC2, and guide mechanisms XG1 and XG2 secured to the upper and lower lid members XC1 and XC2 (exemplifying the "holding member" of the present invention), respectively. These key parts will now be detailed in turn.

Each of the upper and lower lid members XC1 and XC2 is shaped to have a containing space enclosed by at least part of the remaining planes other than one plane of a rectangular parallelepiped. Specifically, the upper lid member XC1 has four planes consisting of an upper plane XC11 formed into an approximate rectangular, a side wall plane XC13 perpendicularly standing at one edge of the upper plane XC11, and facing planes XC14 and XC15 not only standing perpendicularly at the remaining two edges of the upper plane XC11 but also being perpendicular to the side wall plane XC13. Incidentally, a side wall surface, which should be located to the opposites side to the above side wall surface XC13, will not be formed in reality. Meanwhile, in the similar manner to the above upper lid member XC1, the lower lid membe4r XC2 has five planes consisting of a lower plane XC21, side wall planes XC22 and XC23, and facing planes XC24 and XC25. As shown in FIG. 2, this lower lid member XC2 includes the side wall plane XC22 positionally corresponding to the side wall of the upper lid member XC1 which has not been formed, unlike the upper lid member XC1.

Each of the above planes is configured as follows. Both of the facing planes XC14 and XC15 of the upper lid member XC1 have openings XC14H and XC15H formed to be cut partly, respectively. Both of the facing planes XC24 and XC25 of the lower lid member XC2 also have openings XC24H and XC25H formed to be cut partly and to be opposed to the foregoing openings XC14H and XC15H, respectively. These openings XC14H, XC15H, XC24H and XC25H are respectively formed to permit DVDs 100 contained in the DVD case XC to be grasped at given positions at the outer circumferences from the outer side, as shown by arrows in FIG. 3. The arrows illustrate grasping directions.

In addition, as shown in FIGS. 3 and 4, on the facing plane XC14 and XC15 of the upper lid member XC1 are formed recesses XC141 and XC151, respectively. On the facing planes XC24 and XC25 of the lower lid member XC2 are projections XC241 and XC251, respectively. In the case of the present embodiment, each of the recesses and projections is located at a given position close to one end (i.e., the leftward end in the case of FIG. 2) of each of the facing planes XC14, XC15, XC24 and XC25. The projections XC241 and XC251 and the recesses XC141 and XC151 are shaped so that each projection XC241 can be fit into each recess XC141, as shown in FIG. 4 that is an enlarged view of a region shown by a reference A in FIG. 3. Though not shown in FIG. 4, the recess XC151 and the projection XC251 are shaped in the same way as the above. In the DVD case XC according to the present embodiment, the fitting configurations formed between the projection XC241 (XC251) and the recess XC141 (XC151) are combined with positioning of the projections XC241 and XC251 and the recesses XC141 and XC151, with the result that, as shown in FIG. 2, the upper lid member XC1 can be opened and closed from to the lower lid member XC2 around an axis realized by the mutually fitted portions (refer to a bi-directional arrow in FIG. 4).

As shown in FIGS. 2 and 4, the facing planes XC24 and XC25 of the lower lid member XC2 are partitioned to form tongue-like members XC24Z and XC25Z, respectively, in such a manner that each tongue-like member XC24Z (XC25Z) encloses the foregoing protrusion XC241 (XC251). Practically, of these tongue-like member XC24Z and XC25Z, one tongue-like member XC24Z is shaped into an approximate rectangular, as shown in FIGS. 4 and 5. One edge of the tongue-like member XC24Z is rigidly connected with the facing plane XC24 (hereafter the edge is referred to as a "connected edge Z1"). In contrast, the remaining three edges are cut to be disconnected from the facing plane XC24 (hereafter those three edges are referred to as "disconnected edges X2"). This configuration allows the tongue-like member XC24Z to swing about an axis served by the connected edge Z1, as shown by a dashed line in FIG. 4, so that the tip of the member XC24Z deviates from the body of the facing plane XC24. That is, the tongue-like member XC24Z is deformable so that its tip is lifted to cause the member body itself to be curved. Additionally, as shown in FIGS. 2 and 4, to push the tongue-like member XC24Z at a given position nearer to its tip from the outside, a side of the facing plane XC14 (XC15) of the upper lid member XC1 is cut from its edge to form a notch XC142 (XC152). Forming the notch XC142 (XC152) permits the tongue-like member XC24Z to be pushed from the outside, as illustrated by an outline arrow in FIG. 4. Though not shown in detail, the foregoing configurations in relation to the tongue-like member XC24Z are totally applied to those of the tongue-like member XC25Z embedded in the other facing plane XC25.

Both of the upper and lower lid members XC1 and XC2 are made of, by way of example, plastic materials appropriately selected. In the present embodiment, both of the upper and lower lid members XC1 and XC2 are made of a transparent plastic material. This can be seen from FIG. 2, in which some hidden parts, which should be indicated by dashed lines because those parts are hidden by components positioned in front of those parts, are still indicated by dashed lines.

Furthermore, at the centers on the upper and lower planes XC11 and XC21 of the upper and lower lid members XC1 and XC2 are formed guide mechanisms XG1 and XG2, respectively. Each of the guide mechanisms XG1 and XG2 are formed into an almost cylindrical pillar when viewing their appearances, as can be seen in FIG. 2 and other drawings, and can be fitted into central holes of DVDs 100 that have been contained. In addition, an outer diameter of the upper guide mechanism XG1 is determined to be smaller than an inner diameter of the lower guide mechanism XG2, which permits the upper guide mechanism XG1 to be fitted into the lower guide mechanism XG2.

Although there is a difference in diameter between the upper and lower guide mechanisms XG1 and XG2 as described above, the remaining components of both the guide mechanism XG1 and XG2 are almost the same, including a disc member XG11, cylindrical member XG12, and ball screw XG13. The configurations of those mechanisms XG1 and XG2 serve as part of the desired-DVD separation mechanism 4, which will be described in association with a detailed explanation for the desired-DVD separation mechanism 4 which will also be described later, together with detailed explanations for configurations and operations of the remaining components.

The various constituents that serve as the main units of the DVD player 1, that is, the DVD grasping mechanisms 2, DVD-case separation mechanisms 3, desired-DVD separation mechanism 4, and pickup unit 5, will now be detailed.

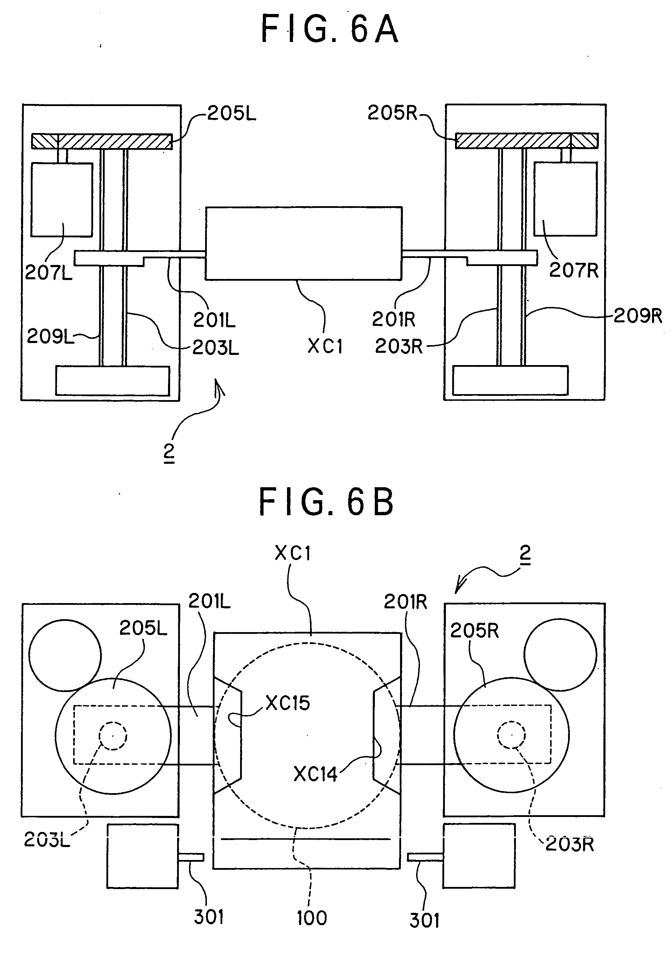

As shown in FIGS. 1 and 6, each of the DVD grasping mechanisms 2 includes chuck members 201 (201L, 201R) for grasping a desired DVD 100, ball screw members 203 (203L, 203R) individually engaging with and being arranged to path through the chuck members 201, two sets of a train of gears 205 (205L, 205R) individually transmitting drive forces to the ball screw members 203, and drive motors 207 (207L, 207R) individually coupled with one gear of each of the gear train sets. Through each chuck member 201 is arranged a fixed shaft 209 (209L, 209R). FIGS. 6A and 6B are, respectively, the frontal view and the top plan view of the DVD-grasping mechanisms.

Each chuck member 201 is placed to grasp in the radial direction a given position at the circumferential edge of one disc arbitrarily selected from a plurality of DVDs 100 contained in the DVD case XC, that is, a DVD 100 to be replayed. Both of the ball screw 203 and the fixed shaft 209 are arrange to run through each chuck member 201. Each fixed shaft 209 is arranged to regulate the rotation of each chuck member 201. Rotating each ball screw 203 enables each chuck member 201 to move upward of downward in FIG. 6A. A drive force generated by each drive motor 207 is transmitted to each of the ball screws 203 via each set of gears 205. Hence operating each drive motor 207 in a well-controlled manner will make is possible that any desired DVD, for example, the third disc 100 from the top within the DVD case XC, is graphed. This grasping operation is carried out with the chuck members 201 through the openings XC14H and XC15H, and XC24H and XC25H.

In order that each DVD 100 is grasped by the chucks 201 extended in the radial direction on both sides thereof, each of the respective constituents of each DVD-grasping mechanism 2 is composed of a pair of right and left mechanisms, as shown in FIGS. 6A and 6B (thus, "L" and "R" are attached to the references). As concerning the configuration of the drive motors 207R and 207L, there can still be provided a modification. That is, the number of drive motors is not confined to two as shown in this embodiment. For instance, one drive motor can be connected to only either gear train, in which a drive force generated by only one drive motor is transmitted not merely to the one gear train in a direct manner but also to the other gear train via means such as pulleys. This allows both the right and left chuck members 201R and 201L to move by only one motor.

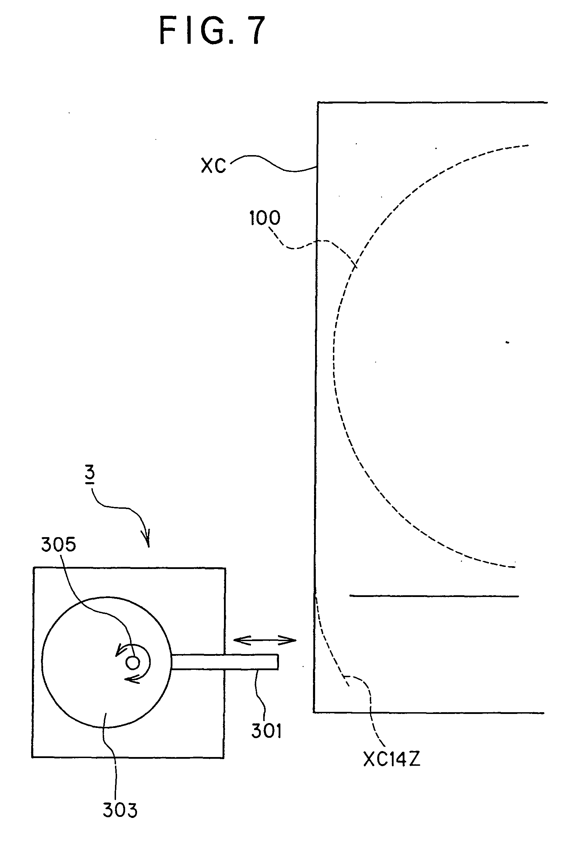

Each of the DVD-case separation mechanisms 3 is equipped with, as shown in FIGS. 1 and 7, a tongue-member push pin 301, eccentric cam 303, and drive-force transmission shaft 305. Like the DVD-grasping mechanisms 2, each DVD-case separation mechanism 3 is arranged on the right and left sides of the DVD case XC, but FIG. 7 depicts only one mechanism. FIG. 7 is the top plan view of one of the DVD-case separation mechanisms 3.

The tongue-member push pin 301 is formed so that the tip of the pin 301 is able to push at a given position existing on the tip of the tongue-like member XC24Z (XC25Z) embedded in the facing plane XC24 (XC25) of the DVD case XC. The base end of this tongue-member push pin 301 is touched to the circumferential surface of the eccentric cam 303. As a result, the rotation of the eccentric cam 303 around the drive-force transmission shaft 305 permits the tongue-member push pin 301 to move outward, that is, rightward in FIG. 7, or move inward, that is, leftward in FIG. 7. Through being not shown, a drive motor adequately chosen is coupled with the drive-force transmission shaft 305.

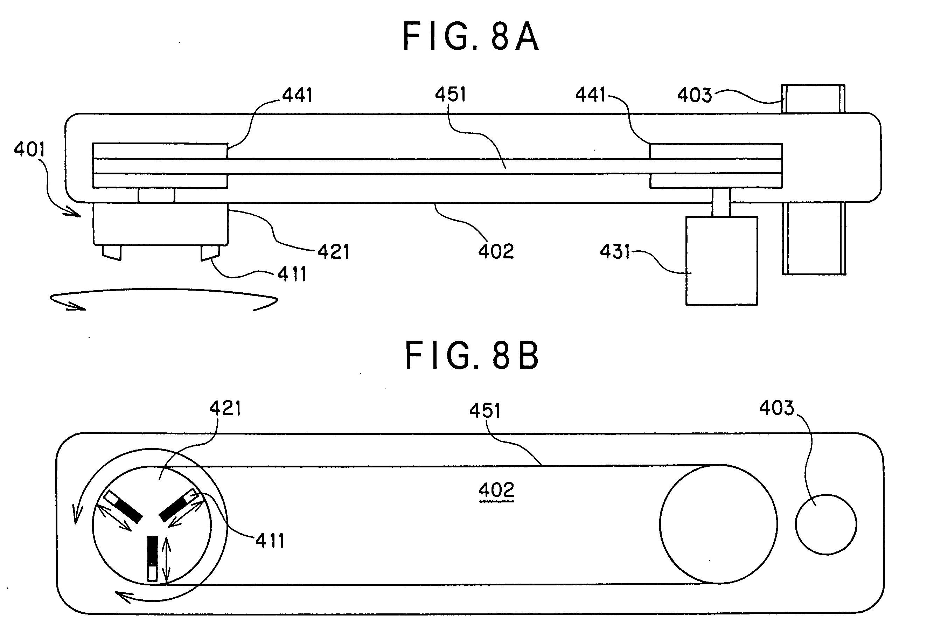

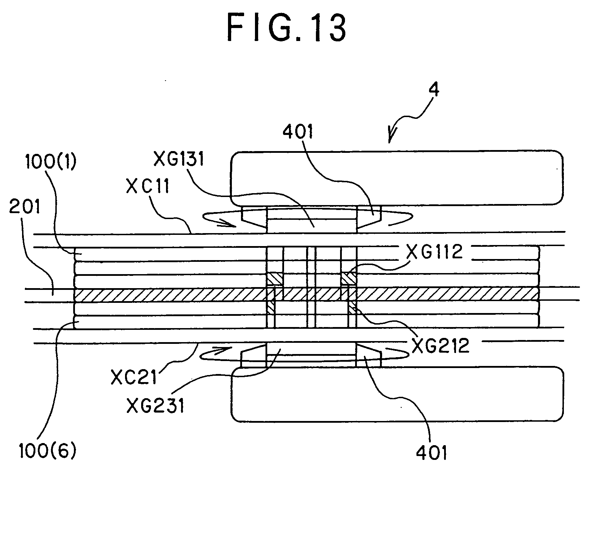

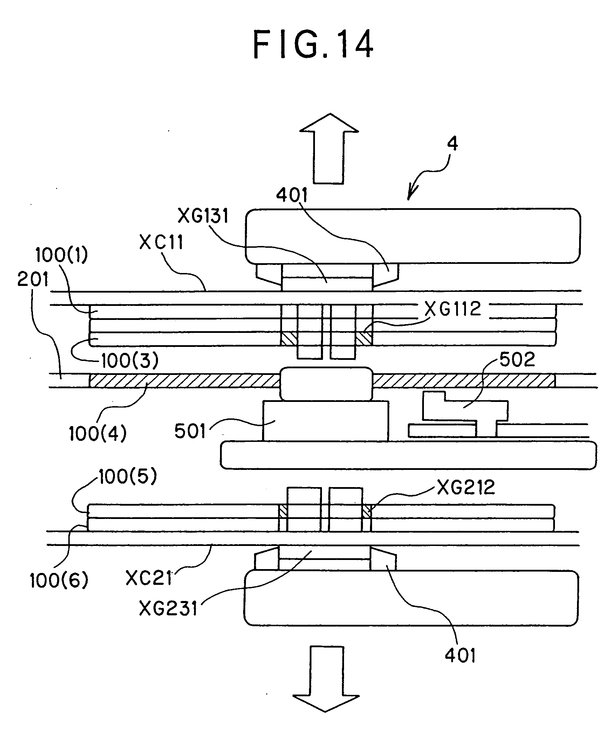

The desired-DVD separation mechanism 4, as shown in FIGS. 1 and 8A, 8B, includes arm members 402 that can be disposed over and under the DVD case XC, grasping/rotating members 401, and a ball screw 403 arranged to run through the base ends of the arm members 402. FIGS. 8A and 8B are, respectively, the frontal view and the top plan view of the desired-DVD separation mechanism. As described before, the desired-DVD separation mechanism 4 according to the present invention utilize, as part of its components, other than the above listed components, both the guide mechanisms XC1 and XG2 formed on the DVD case XC. Concretely, in the present embodiment, a desired DVD 100 to be replayed will be separated through operations done cooperatively by both the desired-DVD separation mechanism 4 and the guide mechanisms XG1 and XG2 (refer to FIGS. 13 and 14 which will be described later).

First of all, the guide mechanisms XG1 and XG2 will now be detailed in terms their configurations.

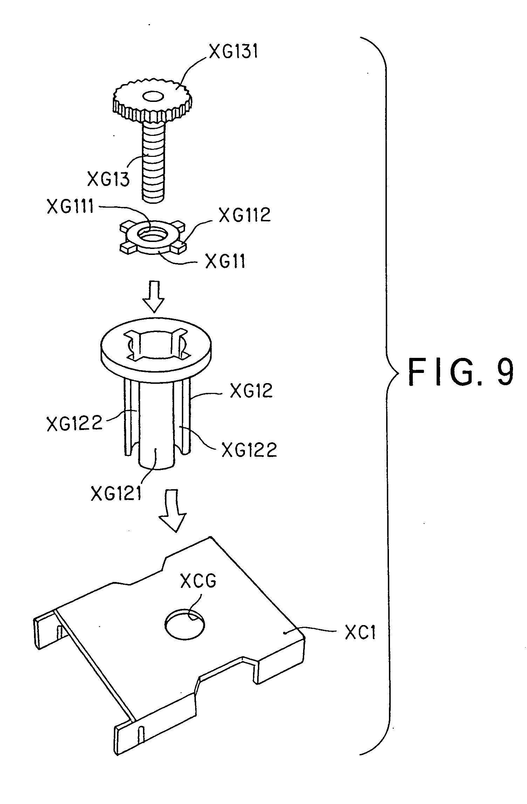

As shown in FIG. 9, each of the guide mechanisms XG1 and XG2 (hereafter, representatively noted by "XG1") is provided with, as essential components, the disc member XG11, cylindrical member XG12, and ball screw XG13. FIG. 9 is an exploded perspective view explaining in detail the guide mechanism XG1.

Through the disc member XG11 is formed a hole XG111 on inner surface of which a thread is formed. Four protrusions XG112 are formed on the outer circumferential surface as well. The protrusions XG112, which are made of properly selected elasticity, are formed to protrude outward from the body of the disc member XG11 in four directions (that is, at angular intervals of 90 degrees). When tracking the tips of the four protrusions XG112 will produce an approximate circle, whose diameter is nearly equal to that of the central hole of each DVD 100. Further, besides such "size (diameter)," a specific relationship, which will be described later, is established between the protrusions XG112 and the central hole of each DVD 100.

The cylindrical member XG12 is produced to have a longitudinal inner hole to accept the foregoing disc member XG11 therein and to have four longitudinal slits XG122 formed along a side wall XG121 of the cylindrical member XG12. The slits XG122 are formed at angular internals of 90 degrees around the side wall XG121, correspondingly to the four-way arrangement of the protrusions XG112. As a result, the disc member SG11 contained in the cylindrical member XG12 is allowed to make its protrusions XG112 protrude outwardly through the slits XG122, respectively.

The ball screw XG13 engages with the hole XG111 of the disc member XG11 so that the ball screw XG13 passes through the disc member XG11. Particularly, in the present embodiment, at the tip of this ball screw XG13 is formed a grip XG131. The grip XG113 is griped by each grasping/rotating member 401, as described later, whereby the ball screw XG 13 can be rotated around its longitudinal axis.

Combining the above three main components into one unit as shown in FIGS. 9 and 2 forms the guide mechanism XG1, and the unit is mounted at a guide-mechanism mounting hole XCG formed through the upper lid member XC 1.

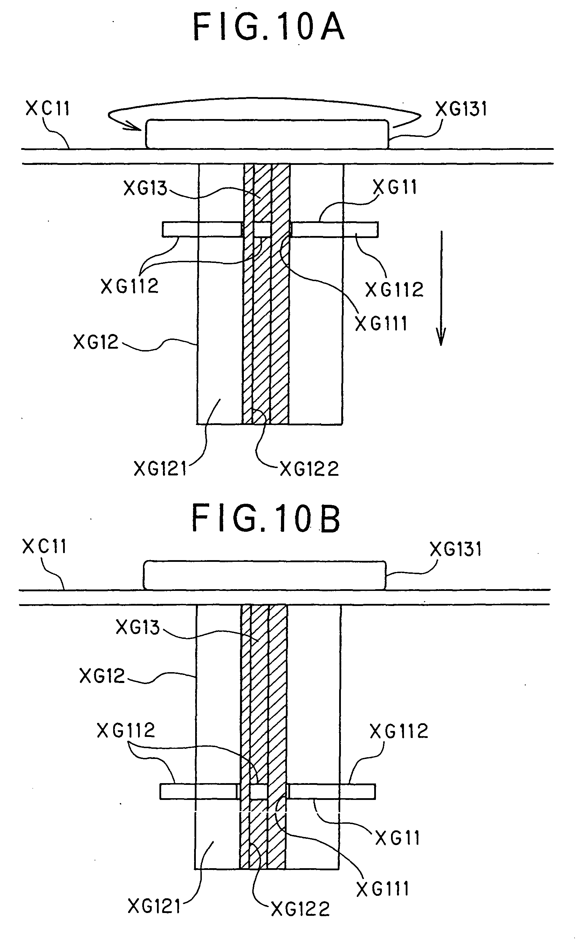

The foregoing construction of the guide mechanism XG1 makes it possible that, as shown in FIGS. 10A and 10B, the disc member XG11 is moved in an up-and-down direction in the figures along the cylindrical member XG12 by rotating the ball screw XG13. If there were no protrusions XG112 on the disc member XG11, rotating the ball screw XG13 would have lead to the rotation of the disc member XG11. However, as clear from FIGS. 2, 9 and 10, the protrusion XG112 on the disc member XG12 protrude outward through the slits 122 of cylindrical member XG12, the disc member XG11 is prohibited from rotating. Thus, because disc member XG12 has the hole XG111 whose inner surface has a thread, the disc member XG12 should move up or down along the cylindrical member XG11.

The above configuration is totally applicable to the guide mechanism formed on the lower lid member XC2. That is, the guide mechanism XG2 has a disc member XG21, a cylindrical member XG22, and a ball screw XG23. The disc member XG21 includes protrusions XG212 and a hole XG211 whose inner surface has a thread is formed through the disc member XG21. Slits XG222 to allow the protrusions XG212 to protrude outward therethrough are formed along the cylindrical member XG22. Furthermore, a grip XG231 is secured to the ball screw XG23.

Additionally, the present embodiment has adopted, as described before, the configuration where the guide mechanism on the upper lid member XC1 can be fitted into the guide mechanism on the lower lid member XC2, whereby the disc member XG21, cylindrical member XG22, and others are different in dimensions from the disc member XG11, cylindrical member XG12. On the other hand, it is required that the dimension of a circle formed by tracing the tips of the protrusions on the upper disc member XG11 be equal to that of the protrusions XG212 on the lower disc member XG21. This is because, as will be described later, any of the protrusions XG112 and XG212 should maintain a specific dimensional relationship between those protrusions and the diameter of the central hole of each DVD100 (refer to FIGS. 10A and 10B being described later).

Moreover, since the upper guide mechanism XG1 can be fitted into the lower guide mechanism XG2, there is a possibility that the disc member XG1 of the upper guide mechanism XG1 may reach the cylindrical member XG22 of the lower guide mechanism XG2, depending on some situations. In order to make the disc member XG11 move smoothly under any situation, it is at least required the inner diameters of the holes XG111 and XG211 formed through the disc members XG11 and XG21 be equal to the outer diameters of the ball screws XG13 and XG23, respectively, and the guide mechanisms XG1 and XG2 be positioned on the upper plane XC11 and lower plane XC21 in such a manner that the slits XG122 and XG222 formed along the cylindrical members XG12 and XG22 are mutually connected to form straight continuous slits, respectively (refer to FIGS. 10A and 10B described later).

On the other hand, the arm members 402, grasping/rotating members 401, ball screw 403, and other components, which are disposed on the main body of the DVD player 1, are configured as shown in FIGS. 8A and 8B. By the way, both the arm members 402 and the grasping/rotating members 401 are disposed by two pairs, one being on an upper side and the other being on a lower side, but FIGS. 8A and 8B show only one pair.

Each arm member 402 is connected to the grasping/rotating members 401 at the tip portion and allows the ball screw 403 to run through the base end thereof. Hence, each arm member 402, which extends from the ball screw 403 within the chassis 1B, is able to locate the grasping/rotating members 401 at the central position of the DVD case XC loaded into the chassis 1B.

The ball screw 403, which engages with the base ends of the arm members 402 to pass therethrough, can be rotated, thereby permitting the arms 402 to move up or down. To the arm members 402 are connected necessary components such as drive motors not shown in FIGS. 8A and 8B. The constructions and operations of those not-shown components are almost identical to those equipped for the chuck members 201 in the foregoing DVD-grasping mechanism 2.

Each of the grasping/rotating members 401 has grasping pieces 411 and a rotating piece 421. The grasping pieces 411 are three claw-shaped pieces located radially on a circular surface of the rotating piece 421 at equal angular intervals, as shown in FIG. 8B. Each of the grasping pieces 411 is configured to move in the radial direction within a limited range, as depicted by straight lines shown in FIG. 8B, which makes it possible to grasp each grip G131 (XG231) of each of the guide mechanisms XG1 and XG2 of the DVD case XC. The rotating piece 421 serves as a base for the grasping pieces 411 and is rotatable. Specifically, to the center of the rotating piece 421 is connected a drive motor 431 via pulleys 441 and a belt 451. Thus, a drive force from the drive motor 431 is transmitted to the rotating piece 421, resulting in the rotation of the rotating piece 421, that is, the grasping pieces 411.

In the above desired-DVD separation mechanism 4, the arm members 402 have been made to move in only the up-and-down direction, but the mechanism 4 of the present invention is not limited to such a construction. Alternatively, each of the arm members 402 can be configured to swing around the ball screw 403 serving as a rotation center. In this configuration, swinging each arm member 402 around the base end thereof allows the tip to move to locate at or retreat from the center of each DVD 100 in the DVD case XC loaded into the DVD player 1. Hence the situation that the arm members 402 may become obstacles during a loading operation of the DVD case XC can be removed. This will lead to a higher flexibility for layout of various components within the chassis 1B.

Accordingly, the desired-DVD separation mechanism 4 makes it possible that the grasping/rotating members 401 of the arm members 402 to grasp and rotate the grips XG131 and XG231 of the guide mechanisms XG1 and XG2 disposed at the upper and lower centers in the DVD case XC. Responsively to this rotation, in the guide mechanisms XG1 and XG2, the ball screws XG13 and XG23 are also obliged to rotate, thereby permitting the disc members XG11 and XG21 placed within the cylindrical members XG12 and XG22 to move in the up-and-down direction in FIGS. 10A and 10B. Hence the protrusions XG112 and XG212 of the disc members XG11 and XG21 have the capability of fixedly holding the central hole of each DVD 100 in a cooperative manner. This will be detailed later again with reference to FIGS. 13 and 14.

Although not shown, the DVD player 1 according to the present embodiment has a sensor for detecting the number of DVDs. This sensor can be made into, for example, an optical sensor including a semiconductor laser unit and an optical receiver. Mounting such a sensor within the DVD case XC to be loaded into the chassis 1B makes it possible to detect how many DVDs are contained in the DVD case XC.

As illustrated in FIG. 1, the pickup unit 5 has a spindle motor 501 to rotate a desired DVD 100 to be replayed, a pickup to read pieces of content information recorded on a recording surface of each DVD100, and a carriage motor 503 to move the pickup 502 in the radial direction of the DVDs 100. However, because these components have already been known, they will be omitted from being explained.

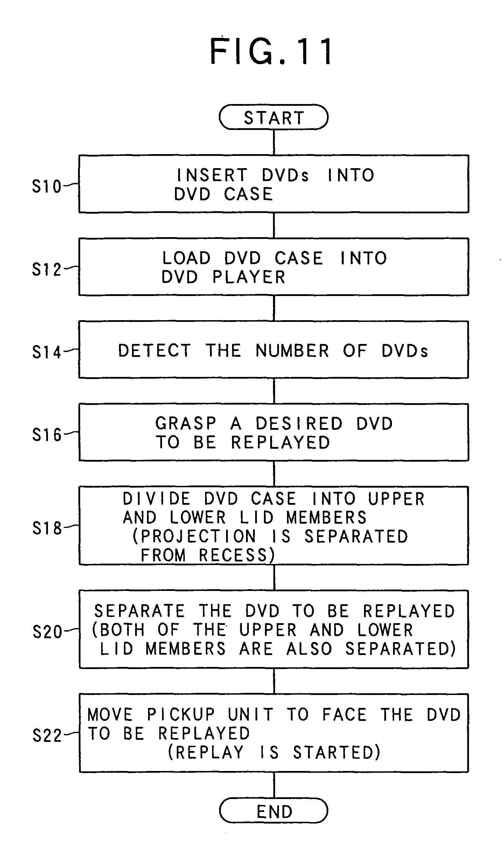

Referring to FIG. 11, the operations and advantages of the above DVD player 1 will now be explained.

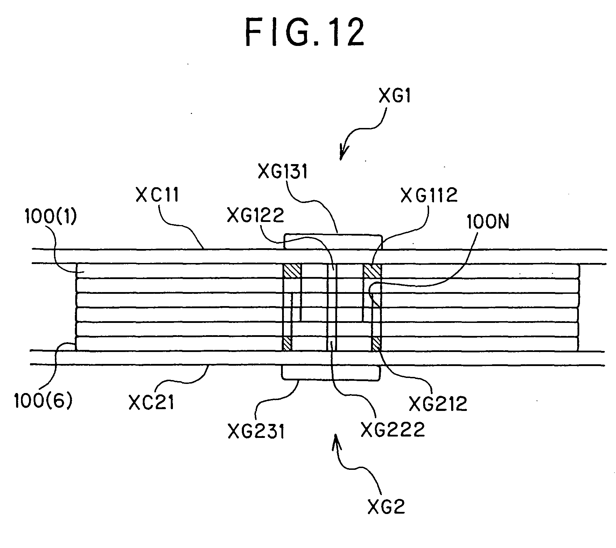

First, a plurality of DVDs 100 are loaded with the DVD case XC according to the present invention (Step S10 in FIG. 11). This loading is carried out in such a manner that, as shown in FIG. 12, the guide mechanisms XG1 and XG2 are made to pass through the central holes 100N of the DVDs 100 which are stacked one on another without gaps therebetween. Thus, each of the surfaces of each DVD 100 is directly touched to that of an adjacent one. In the following, exemplified is an example in which the number of DVDs 100 is six and the DVDs are referenced by 100(1), 100(2), ..., 100(6) from the top, as shown in FIG. 12.

The DVD case XC in which the DVDs 100 are contained is then loaded into the DVD player 1 (Step S12). The loaded DVD case XC is made to position at an approximately center among the foregoing various components within the DVD player 1. In the present embodiment, using the sensor for detecting the number of DVDs, it is determined how many DVDs 100 are contained in the DVD case XC (Step S14). The number of DVDs that has been determined (in this example, "6") will be referred during the operations of the DVD-grasping mechanisms 2, desired-DVD separation mechanism 4, and others.

In response to a user's command for replay, the DVD player 1 commences the replay processing. By way of example, an assumption can be made such that the user's command indicates that the fourth DVD 100(4) from the top within the DVD case XC is desired to be replayed.

When the DVD player 1 receives the command for replay, both of the DVD-grasping mechanisms 2 and the DVD-case separation mechanisms 3 start operating. In each of the DVD-grasping mechanisms 2, to grasp the fourth DVD 100(4), the drive motor 207 is driven during a predetermined period of time, resulting in that a drive force is transmitted to the chuck member 201 via the train of gears 205. Hence each chuck member 201 is obliged to move up and down to settle at a desired location to gasp the DVD 100(4) (Step S16). In this grasping operation, the chuck members 201 are able to grasp with steadiness, because the number of DVDs 100 contained in the DVD case XC has already accurately detected. In addition, the present invention is particularly characteristic of grasping the desired DVD 100(4) through the openings XC14H and XC15H, and XC24H and XC25H (hereafter, representatively noted by "XC14H") formed through the sides of the DVD case XC. In other words, as described with FIG. 3, the outer circumferential edge of each DVD100 is partly exposed to the outside of the DVD case XC, thus facilitating the grasping operation.

The DVD-case separation mechanism 3 will then start operating. Specifically, each eccentric cam 303 is driven to rotate, resulting in that each tongue-member push pin 301 is forced to run through the notch XC142 (XC152) of the upper lid member XC1 of the DVD case XC so as to be push to each tongue-like member XC24Z (XC25Z) at an appropriately controlled pushing force. As a result, as shown in FIG. 5, the tongue-like member XC24Z (XC25Z) is pushed to be deformed into a curve form. Thus, the projections XC241 and XC251 of the lower lid member XC2 and the recesses XC141 and XC151 of the upper lid member XC1, which are disposed on both sides of the DVD case XC, can be separated from each other, so that the upper and lower lid members XC1 and XC2 can be separated, as will be described later (Step S18).

The desired-DVD separation mechanism 4 will then be operated. Practically, the ball screw 403 is driven to rotate by a predetermined angle to move the arm members 402 upward of downward. Thus, the grasping/rotating members 401 disposed at the tip portions of the arm members 402 are made to touch the guide mechanisms XG1 and XG2 on the upper and lower lid XC1 and XC2 of the DVD case XC, respectively. The grasping pieces 411 at the grasping/rotating members 401 then grasp the grip XG131 and XG231 of the guide mechanisms XG1 and XG2, respectively, and then the rotating pieces 421 are driven to rotate by predetermined angles, respectively. Thus, as described with reference to FIGS. 10A and 10B, in the guide mechanisms XG1 and XG2, the disc members XG11 and XG21 are moved up and down along the inner holes of the cylindrical members XG12 and XG22, respectively.

Between each of the protrusions XG112 (XG212) and the central hole 100N of each DVD 100 is a "specific relationship," which will be described as follows. To be specific, as described with reference to FIGS. 10A and 10B, moving the disc members XG11 in the up-and-down direction and holding the inner circumference of the central hole 100N of a DVD 100 to be replayed by the protrusions XG12 will separate, from a DVD 100 to be replayed, one or more DVDs 100 located immediately on and/or beneath the DVD 100 to be replayed. In order to complete the above "movement" down to the third DVD 100(3) shown in FIG. 12, it is necessary for the disc member XG11 to pass in turn through the central holes 100N of the two DVDs 100(1) and 100(2). Hence a remarkably high rigidity of the protrusions XG112 makes such movements difficult or impossible. By contrast, when the disc member XG11 reaches the third DVD 100(3), the latter "holding" should be achieved for the third DVD100(3). However, the rigidity of the protrusions XG112 is too high, the holding operation is also difficult or impossible. Therefore, to fulfill the above two requirements under ordinary situations, a specific relationship between the protrusions XG112 and the central hole 100N of a DVD 100 should be met in terms of various factors such as materials and shapes.

More concretely, it is preferred that an imaginary circle produced by tracing the tips of the protrusions is equal in the dimension to the central hole 100N of a DVD 100 and the protrusions XG112 are made of materials having a properly selected amount of rigidity. In the present embodiment, as described before, the protrusions XG112 have been made of a material whose rigidity is suitable for the two requirements, whereby the "specific relationship" is fulfilled with steadiness.

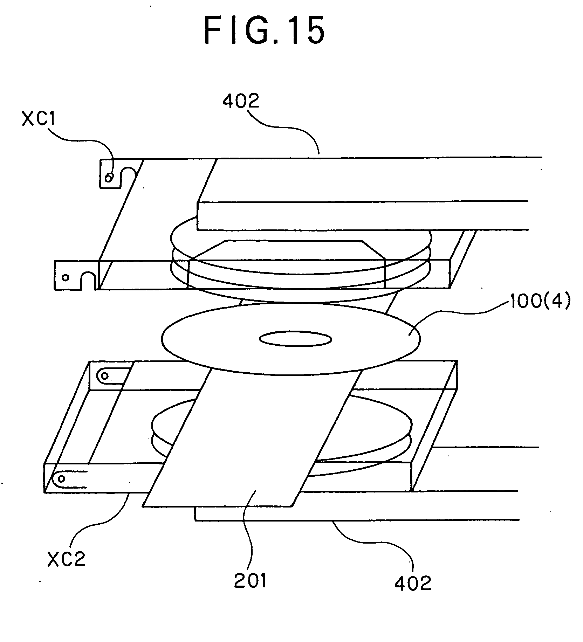

Therefore, the configuration according to the present invention allows the DVD 100(4) being replayed to be separated, as shown in FIGS. 13 and 14 (Step S20). Specifically, as shown in FIG. 13, the central holes 100N of the DVDs 100(3) and 100(5) immediacy on and beneath the DVD 100(4) to be replayed, which have been grasped by the chuck members 201 of the DVD-grasping mechanisms 2, are fixedly held by the protrusions XG112 and XG212 of the disc members XG11 and XG21 mounted to the guide mechanisms XG1 and XG2, respectively. This holding operation can be done as shown in FIG. 13, where the grips XG131 and XG231 of the guide mechanism XG1 and XG2 are grasped and rotated by the grasping/rotating members 401 of the desired-DVD separation mechanism 4. As described before, the protrusions XG112 and XG212 are made of a materiel whose elasticity is proper for those grasping/rotating operations and an imaginary circle formed by tracing the tips of such protrusions is approximately equal in the dimension to the central holes 100N of the DVDs 100. This makes it possible, with steadiness, the disc members XG11 and XG21 move smoothly and the protrusions XG112 and XG212 fixedly hold the circumferences of the holes 100N. Then, the desired-DVD separation mechanism is driven to move each of the arm members 402 upward or downward, as illustrated in FIG. 14. By those upward and downward movements of the arm members 402, the third DVD 100(3) fixedly held as shown in FIG. 13 and one or more DVDs located on and above the third DVD 100(3); that is, the DVDs 100(3), 100(2) and 100(1) are lifted up together with the upper lid member XC1, while the fifth DVD 100(5) fixedly held as shown in FIG. 13 and one or more DVDs located beneath the fifth DVD 100(5); that is, the DVDs 100(5) and 100(6) are lifted down together with the lower lid member XC2. As a result, the DVD 100(4) to be replayed appears to be suspended in the air within the DVD case XC, thus completing the separation of the target DVD 100(4) from the other DVDs. FIG. 15 pictorially shows the DVD 100(4) to be replayed, which is almost suspended in the DVD case XC. In addition, the upper and lower lid members XC1 and XC2 are separated from each other such that one is lifted up and the other is lifted down. Only the DVD 100(4) grasped by the chuck members 201 is exposed to the outside as if the DVD 100(4) is suspended in the air.

After this separation, the pickup unit 5 is moved to a predetermined location to fit the output shaft of the spindle motor 501 into the central hole 100N of the DVD 100(4) to be replayed and to position the pickup 503 at a given position face to face toward an information recorded surface of the DVD 100(4) (refer to FIG. 15). Then, the pickup unit 15 in the ordinary fashion carries out the reply processing (Step S22). More practically, the above fitting operation is performed such that a not-shown disc clamp mechanism and other components operate to clamp the circumference of the hole 100N of the DVD 100(4), whereby a physical connection of the output shaft of the spindle motor 501 to the hole 100N is provided. Moreover, in cases where an after-replay DVD is returned to the DVD case XC, the operations opposite to those require for the replay are carried out.

As described above, the DVD player 1 according to the present invention has the various advantages as follows.

First, a plurality of DVDs 100 are stacked one on another without a gap therebetween within the DVD player 1. That is, the DVDs are placed so that a surface of one DVD is touched to a surface of another DVD adjacently located. Thus, unlike the conventional, it is not required to use trays on each of which a DVD is placed. Compared to the conventional, correspondingly to non-use of the trays, the DVD player 1 according to the present embodiment can be made compact.

Further, as described, in the present embodiment, a spatially small action is enough for separating a DVD 100(4) being replayed from the other DVDs. Practically, it is sufficient that the DVDs 100(5) and 100(6) beneath and below the DVD 100(4) being replayed are moved down to the degree to which a minimum space allowing the pickup unit 5 to be disposed between the DVD(4) and the DVDs 100(5) and 100(6) is produced. In contrast, it is still sufficient that the DVDs 100(1) to 100(3) on and above the DVD 100(4) being replayed are moved up to the degree to which a minimum level to avoid interference with the DVD 100(4) being replayed is secured. That is, provided that only the spaces to enable the foregoing minimum movements are assured, the DVD 100(4) can be subjected to the replay, thus avoiding the apparatus from being produced larger. Furthermore, the fact that an action needed for separating a DVD 100(n) being replayed can be limited to an extremely smaller space will lead to a very smooth and quick successive replay operation, in which completion of replay of a DVD 100(n1) is followed successively by starting replay of a new DVD 100(n2) (n2 ≠ n1).

According to the present embodiment, the DVD player 1 can perform a greatly smooth and quick successive replay operation. In other words, a desired DVD 100(n) to be replayed can be selected very quickly, with the DVD player 1 still being made compact.

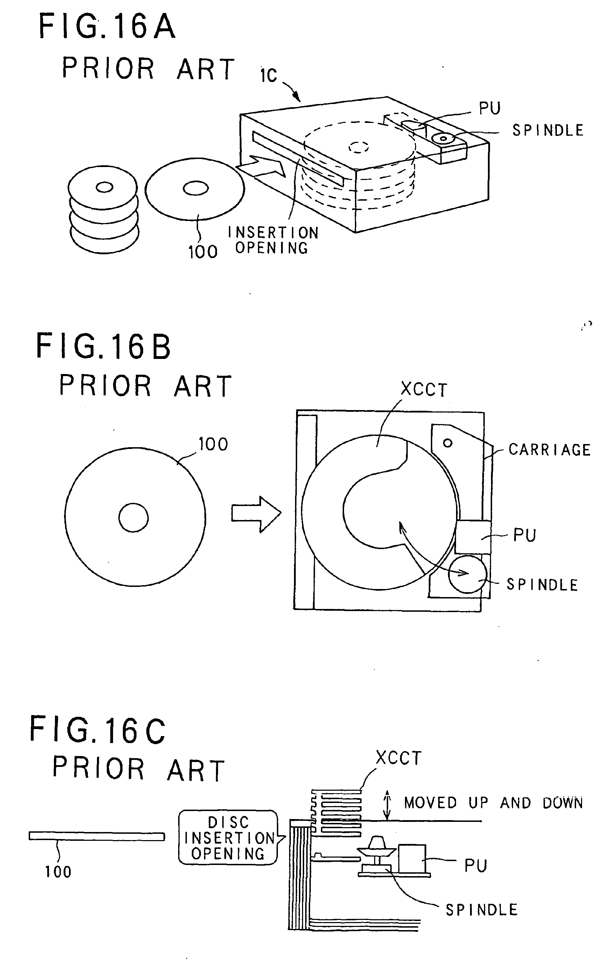

The foregoing operations and advantages can be made clearer if compared to a conventional DVD player shown in FIG. 16. FIGS. 16A to 16C are a perspective view showing the entire configuration of the conventional DVD player 1C, a top plan view thereof, and a side view thereof, respectively.

As can be understood from FIGS. 16A to 16C, the conventional DVD player 1C is similar to the DVD player 1 according to the above embodiment in that a plurality of DVDs 100 can be loaded. However, in the case of the conventional DVD player 1C, each of the plurality of DVDs is placed on each tray XCCT. Furthermore, selecting a desired DVD 100 being replayed requires that the remaining DVDs 100 be moved, tray by tray, upward in FIG. 6C. Therefore, in the case of the conventional DVD player 1C, aside from a space in which the DVDs 100 are placed, it was needed to prepare for another space to accommodate such an upward movement of the trays XCCT. In this configuration, it takes a relatively longer time to successively replay from a certain DVD to the next, because the trays have to move over longer distances.

By contrast, the DVD player 1 of the present embodiment is able to resolve the foregoing two problems without failure. That is, the DVD player 1, which is compact in the dimensions, is able to successively replay DVDs in a smooth and quick manner.

Further, in the present embodiment, the DVD case is used which have lid members greater in handling than a magazine of which an inlet for recording mediums is opened. Such a DVD case itself is inserted into a chassis to replay content information recorded on a disc-like recording medium. Thus, the present embodiment is able to provide an information replaying apparatus and a method for replaying information with higher user-friendliness.

In particular, the above advantages provided by the DVD player 1 of the present embodiment become more noticeable when the DVD player 1 is mounted on a vehicle. Since it is possible to produce a more compact DVD player 1 than the conventional, such a DVD player 1 can be equipped as part of the dashboard giving crews more pleasant operations, without being equipped in the trunk and others, which have conventionally been taken place.

A further advantage of the present embodiment over the conventional is as follows. The DVD player 1 can be loaded into the DVD case XC and the upper and lower lid members XC1 and XC2 composing the DVD case XC can be separated from each other in a relatively easier manner. This results from the employment of the projections XC241 and XC251 and the recesses XC141 and XC151 or the tongue-like members XC24Z and XC25Z. Therefore, an advantage that a plurality of DVDs 100 can be handled easier thanks to use of the DVD case XC is provided, together with a second advantage that a compact DVD player 1 has the capability of performing the successive replay operation. In addition, the desired-DVD separation mechanism 4 is composed of the grasping/rotating members 401 and others attached to the DVD player 1 and the guide mechanism XG1and XG2 attached to the DVD case XC. And the separation of a desired DVD 100(4) to be replayed can be done cooperatively by the components on both sides. Hence the desired-DVD separation mechanism 4 mounted to the DVD player 1 can be simplified in its construction.

Incidentally, the present embodiment is able to provide further various modifications as follows. In the foregoing embodiment, to separate a DVD 100(4) being replayed, the disc members XG11 and XG21 of the guide mechanisms XG1 and XG2 on the DVD case XC are utilized and the grasping/rotating members 401, arm members 402, and others in the DVD player 1 are also utilized. However, the present invention will not be confined to such a construction. For example, in place of or additionally to the grasping/rotating members 401, at each of the tips of the arm members 402 are components equivalent in functions to such factors as the foregoing disc members XG11 and XG21, cylindrical members XG12 and XG22, and ball screws XG13 and XG23. By this configuration, fixedly holding one or more DVDs immediately on and/or beneath a desired DVD being replayed, which has been responsible for the guide mechanisms XG1 and XG2, may be done by the DVD player. In this configuration, for example, DVDs 100 that are not contained in a case may be loaded into the DVD player, and necessary steps may be taken place such that the disc member XG11 arranged as part of the desired-DVD separation mechanism 4 is inserted into the central hole 100N of each DVD 100.

Furthermore, although the foregoing embodiment has been described on the DVD player 1 for replaying DVDs 100, the present invention is not limited to such a mode. Alternately, players to replay other disc-like recording mediums, such as CDs or MDs, can be realized based on the identical configurations to the above.

Although the description above contains many specificities, these should not be construed as limiting the scope of the invention but as merely providing illustrations of some of the presently preferred embodiments of the present invention. Thus the scope of the present invention should be determined by the appended claims and their equivalents.

## Claims

1. An information replaying apparatus(1) **characterized in that** the information replaying apparatus(1) comprises:
a chassis(1B) in which a plurality of disc-like information recording mediums are stacked one on another with one surface of each medium touched to one surface of another juxtaposed medium;
a grasping member(2) configured to be disposed in the chassis(1B) and to grasp a disc-like recording medium to be replayed among the plurality of recording mediums;
a separation member(4, XG1, XG2) configured to separate one or more other disc-like recording mediums other than the recording medium to be replayed, from the recording medium to be replayed; and
a replay unit( 5 ) configured to replay pieces of content information recording on an information recorded surface of the disc-like recording medium to be replayed.

2. The information replaying apparatus(1) according to claim 1, **characterized in that** the separation member(4, XG1, XG2) comprises
a holding member(XG1, XG2) configured to fixedly hold a disc-like recording medium located immediately on the disc-like recording medium to be replayed among the other disc-like recording mediums; and
a drive unit(4) configured to move the disc-like recording medium fixedly held by the holding member(XG1, XG2) along a stacking direction of the plurality of stacked disc-like recording mediums.

3. The information replaying apparatus(1) according to claim 2, **characterized in that** each of the plurality of recording mediums has a central hole formed at a center thereof and
the holding member(XG1, XG2) is formed to fixedly hold an edge encircling the central hole of the disc-like recording medium located immediately on the disc-like recording medium to be replayed.

4. The information replaying apparatus(1) according to claim 3, **characterized in that**
the holding member(XG1, XG2) includes a disc body(XG11, XG 21) on which a protrusion(XG112, XG212) is formed to be in contact with the edge encircling the central hole of the disc-like recording medium so that the edge is fixedly held, the protrusion(XG112, XG21 2) being formed to be able to pass through the central hole of the disc-like recording medium, and
the drive unit(4) is configured to move the disc body(XG11, XG 21) to locate the disc body at the central hole of the disc-like recording medium immediately on the disc-like recording medium to be replayed.

5. The information replaying apparatus(1) according to any of claims 1 to 4, **characterized in that**
the plurality of disc-like recording mediums are contained in a container(XC) so that the mediums are stacked one on another with no gap therebetween, the container(X C) being loadable into the chassis(1B) and having a first lid member(XC1) and a second lid member(XC2), and
the separation member(4, XG1, XG2) is configured to separate, from the disc-like recording medium to be replayed, both of the first and second lid members(XC1, XC2) as well as the other disc-like recording mediums other than the disc-like recording medium to be replayed.

6. The information replaying apparatus(1) according to claim 5, **characterized in that**
the container(XC) is configured to be able to cause a recess(XC 141, XC151) formed on one of the first and second lid members(XC1, XC2) to be fitted to a projection(XC241, XC251) formed on the other of the first and second lid members(XC1, XC2), thus an open and close operation being allowed between the first and second lid members(XC1, XC2), and to cause the recess(XC141, XC151) to be released from the projection(XC241, XC251) fitted to the recess(XC141, XC151), thus the first and second lid members(XC1, XC2) being separable; and
the separation member(4, XG1, XG2) comprises a releasing member(XC24Z, XC25Z) configured to release a fitted state realized between the recess(XC141, XC151) and the projection(XC241, XC251) of the container(XC) loaded into the chassis(1B)

7. The information replaying apparatus(1) according to either one of claim 5 or 6, **characterized in that**
each of the first and second lid members(XC1, XC2) has an opening(XC14H, XC15H, XC24H, XC25H) through which at least part of an outer circumferential edge of each of the disc-like recording mediums is viewed, and
the grasping member(2) is configured to grasp, through the opening(XC14H, XC15H, XC24H, XC25H), the outer circumferential edge of the disc-like recording medium to be replayed, along a radial direction thereof, in the container loaded into the chassis(1B)

8. The information replaying apparatus(1) according to any one of claims 5 to 7, **characterized in that**
each of the first and second lid members(XC1, XC2) has a cylindrical fixing member(XG1, XG2) fittable into the central hole of each of the disc-like recording medium, and
the drive unit(4) is configured to move the disc body(XG11, XG 21) along a direction in which the fixing member(XG1, XG2) extends so that the disc body(XG11, XG21) is located at the central hole of the disc-like recording medium immediately on the disc-like recording medium to be replayed.

9. The information replaying apparatus(1) according to any one of claims 4 to 8, **characterized in that** the protrusion(XG112, XG2 12) has a given amount of elasticity.

10. A method for replaying information **characterized in that** the method for replaying information comprises the steps of:
inserting, into a chassis, at a time, a plurality of disc-like information recording mediums stacked one on another with one surface of each medium touched to one surface of another juxtaposed medium so that the mediums are loaded at given positions in the chassis;
grasping a disc-like recording medium to be replayed among the plurality of recording mediums loaded at the given positions in the chassis;
separating one or more other disc-like recording mediums other than the recording medium to be replayed, from the recording medium to be replayed; and
replaying pieces of content information recorded on an information recording surface of the disc-like recording medium to be replayed.
